Europäisches Patentamt

European Patent Office

Office européen des brevets

(11) Publication number: **0 323 164 B1**

(12) **EUROPEAN PATENT SPECIFICATION**

(45) Date of publication of patent specification: **29.07.92**   (51) Int. Cl.⁵: **B29D  30/06**

(21) Application number: **88312233.5**

(22) Date of filing: **22.12.88**

(54) **Method and apparatus for vulcanising an elastomer product.**

(30) Priority: **29.12.87 JP 334256/87**
**19.07.88 JP 180798/88**

(43) Date of publication of application:
**05.07.89 Bulletin  89/27**

(45) Publication of the grant of the patent:
**29.07.92 Bulletin  92/31**

(84) Designated Contracting States:
**DE FR GB IT**

(56) References cited:
**EP-A- 0 050 956**
**DE-A- 2 545 844**
**GB-A- 980 043**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Kubota, Akinori 1-2 Ryugadai 1-chome**
**Suma ku Kobe shi**
**Hyogo ken(JP)**
Inventor: **Ijiri, Masaaki 407-408 Oshikusadan-chi**
**2-1 Shiratori 4-chome Tohgo-cho Aichi gun**
**Aichi ken(JP)**
Inventor: **Kobayashi, Michihito**
**5-9-11 Itsutsugaoka**
**Toyota-shi Aichi-ken(JP)**

(74) Representative: **Stewart, Charles Geoffrey**
**SP TYRES UK LIMITED Tyre Technical Division**
**Fort Dunlop Birmingham B24 9OT(GB)**

## Description

This invention relates to a method and apparatus for vulcanising an elastomer product such as a tyre for a motor vehicle using gas and steam as pressurising and heating mediums according to the preambles of claims 1 and 5.

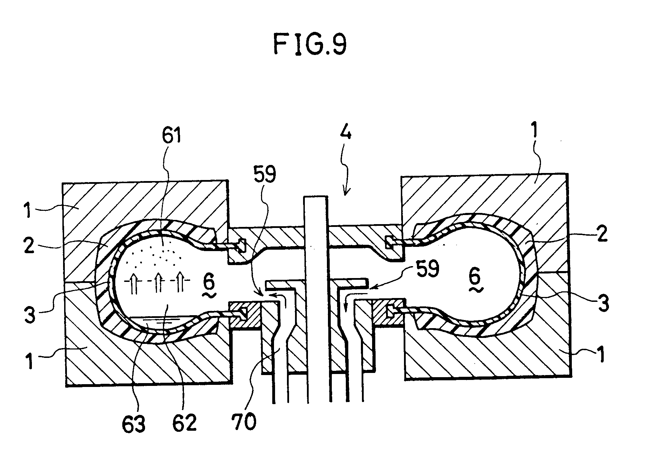

Fig.9 shows a conventional prior art method for vulcanising an elastomer product such as a tyre for a motor vehicle using gas as a pressurising medium which comprises the steps of placing a tyre 2 in a mould 1, bringing a bladder 3 into contact with the inner surface of the tyre 2 to give pre-shaping pressure, closing the mould 1 to bring the tyre 2 into contact with the mould inner surface and firstly heating the tyre 2 under pressure by supplying steam as a heating medium. The steam is blown in substantially horizontal directions from nozzles 59 provided in a central unit of the vulcanising machine and communicated through a supply passage 70 into the inner space 6 of the tyre 2 or vulcanising chamber. The supply of steam is stopped either when the temperature of the tyre rises to a specified temperature or after the lapse of a predetermined period of time, and then combustion gas or nitrogen gas is supplied as a pressurising medium at a pressure equal to or higher than that of the steam. The gas is blown in horizontal directions from the nozzles 59 or separate pressurising medium nozzles provided at the same level as the steam nozzles 59 and connected with the supply passage into the inner space 6 of the tyre 2.

In such a conventional method in which steam is blown in substantially horizontal directions, an amount of steam condensate appears in the lower portion of the inner space 6 and is not discharged by the gas and this hinders the lower sidewall of the tyre 2 from rising in temperature. The prior art uses pressurising gas having a temperature lower than that of steam and the region into which the pressurising gas in blown, e.g. the lower bead portion, is liable to be undesirably cooled. Additionally, the pressurising gas has a specific gravity greater than that of steam and is accordingly liable to stay in the lower portion of the inner space 6. Consequently, the temperature of the lower side wall and lower bead portion of the tyre which are in contact with the low temperature gas becomes low. On the other hand, steam is liable to stay in the upper portion of the inner space 6 and reaches a high temperature because of being adiabatically compressed by the pressurising gas which is supplied at high pressure. This results in an undesirable rise in the temperature of the upper side wall of the tyre 2. In the inner space 6, consequently, there are a layer 61 of steam in the upper portion, a layer 62 of gas in the lower portion, and a layer 63 of steam condensate iii the lowermost portion.

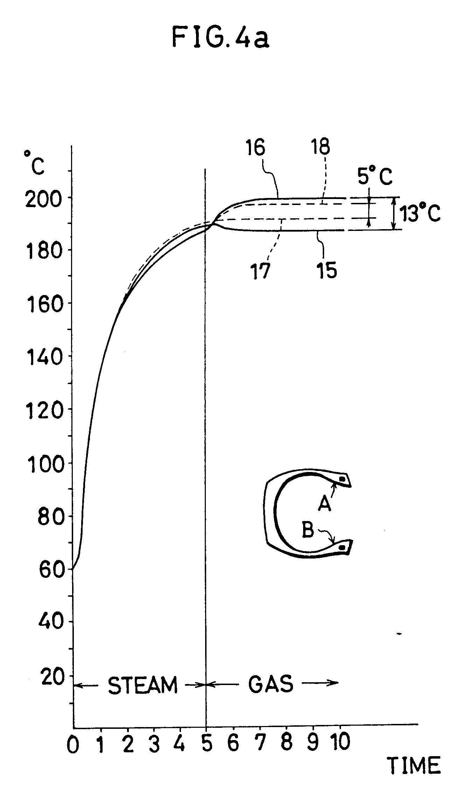

Accordingly, as shown Fig. 4a, for example, the temperature at a point A on the upper bead portion of the tyre 2 rises as shown by the solid line 16 after gas is supplied whereas the temperature at point B on the lower bead portion of the tyre 2 falls as shown by the solid line 15 after gas is introduced. Consequently, a great temperature difference, e.g. 13 degrees centigrade occurs between points A and B.

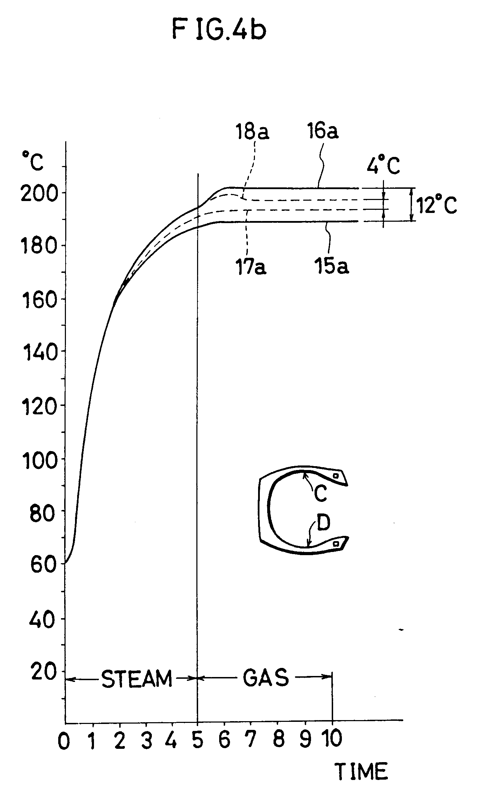

Also, as shown in Fig.4b, the temperature at a point C on the upper side wall of the tyre 2 rises as shown by the solid line 16a after the gas is supplied whereas the temperature at a point D on the lower side wall of the tyre 2 does not rise as shown by the line 15a after the gas is supplied.

Consequently, a great temperature difference, e.g. 12 degrees centigrade occurs between points C and D.

After such a temperature difference occurs, the temperature difference does not entirely disappear even until the vulcanising operation is completed. Accordingly, it can be seen that the degree of vulcanising of the upper and lower side walls of the tyre 2 becomes different from each other. Such a difference is undesirable for the quality of product. Moreover, since the necessary vulcanising time of a tyre is determined based on the vulcanisation of the lower portion of the tyre where the temperature rises most slowly, an undesirably long cure time is required which is disadvantageous in respect of productivity and energy saving.

In GB-A-980 043 there is disclosed a method and apparatus in which the same nozzle is used for supplying the heating medium and the pressurizing medium. The direction of the nozzle is downward, which means that the heating medium and the pressurizing medium are supplied toward the lower portion of the elastomer product. The heating medium is liable to stay in the upper portion of the elastomer product due to its high temperature. Accordingly, when the pressurizing medium is supplied toward the lower portion, the temperature of the lower portion is lower than that of the upper portion. Also, adiabatical compression occurs at the upper portion due to the compression of the heating medium by the pressurizing medium at the upper portion of the elastomer product, which means that the temperature of the upper portion further rises. As a result, the temperature difference between the lower portion and the upper portion of the elastomer product increases.

It is an object if the present invention to provide a method and apparatus for vulcanising an elastomer product in which it possible to eliminate such temperature differences from occurring in the elastomer product during gas vulcanising to assure uniform vulcanising and reduce energy loss.

According to one aspect of the invention a method as set forth in claim 1 for vulcanising an elastomer product comprises the steps of heating under pressure an elastomer product placed in a mould by supplying a heating medium such as steam, stopping the supply of the heating medium when the elastomer product rises to a predetermined temperature or when a specified period of time has elapsed, supplying a pressurising medium such as nitrogen gas at a pressure equal to or higher than that of the heating medium until the heating process is completed, and discharging the vulcanising medium after the heating process is completed characterised in that heating medium is blown into the lower portion of the vulcanising chamber and the pressurising medium is blown into the upper portion of the vulcanising chamber.

Accordingly, the a method of the present invention comprises the steps of heating under pressure an elastomer product in a mould by supplying a heating medium such as steam, stopping the supply of the heating medium when the elastomer product rises to a predetermined temperature or after the lapse of a specified period of time, supplying a pressurising medium such as nitrogen gas at a pressure equal to or higher than that of the heating medium until the heating process is completed, and discharging the vulcanising medium after the heating process, the medium being supplied as the heating medium being blown to a lower portion of a vulcanising chamber and the pressurising medium being supplied with the pressurising medium being blown to an upper portion of the vulcanising chamber.

The invention also provides an apparatus as set forth in claim 5 for vulcanising an elastomer product in which an elastomer product placed in a mould is heated under pressure by supplying a heating medium such as steam, the supply of the heating medium being stopped when the elastomer product rises to a predetermined temperature or after the lapse of a specified period of time, a pressurising medium such as nitrogen gas being then supplied at a pressure equal to or higher than that of the heating medium until the heating process is completed, and the vulcanising medium being discharged after the heating process characterised by a first supply means for blowing the heating medium to a lower portion of a vulcanising chamber and a second supply means for blowing the pressurising medium to an upper portion of the vulcanising chamber.

Accordingly, the heating medium or steam having a high temperature is blown in a downward direction in the inner space of the elastomer product. The pressurising medium or gas having a low temperature is blown in an upward direction. Steam as heating medium, which is liable to undergo condensation in the bottom portion of the inner space, is then dispersed by virtue of a downward flow.

Consequently, condensation which may otherwise hinder heating of the lower portion of the tyre is greatly reduced.

Furthermore, since the steam having a high enthalpy is blown to the lower portion, the lower portion is more effectively heated.

Moreover, gas as the pressurising medium cools the upper portion of the inner space and mixes with steam due to the upward moving energy at the initial blowing.

Consequently, it avoids the steam being adiabatically compressed in an upward direction. Further even at the stage where the inner pressure increases and decreases the in flow velocity of the gas and the steam undergoes condensation to allow more gas to be blown in the gas mixes with the steam in the lower portion because the gas moves downwardly due to its low temperature and high specific gravity. Consequently heat exchange occurs between the gas and the steam, so that the gas rises in temperature. As a result the gas does not stay in the lower portion and widely disperse, which consequently prevents temperature differences from occurring in the inner space of the tyre or vulcanising chamber.

Some examples of the present invention will now be described by way of example only, in conjunction with the attached drawings in which:-

Fig.1a is a vertical sectional view showing a first embodiment of the present invention.

Fig.1b is a partial side view of a weir wall member of the embodiment

Fig.2 is a vertical sectional view showing a second embodiment of the present invention.

Fig.3a is a vertical sectional view showing a third embodiment of the present invention.

Fig. 3b is a side view of a steam blowing section of the embodiment of Fig 3a.

Fig. 3c is a side view of a gas blowing section of the embodiment of Fig. 3a.

Fig. 3d is a vertical sectional view showing a fourth embodiment of the present invention.

Fig. 3e is a vertical sectional view showing a fifth embodiment of the present invention.

Fig. 4a and 4b are graphs showing the relationship between vulcanising time and temperature of specified points on an elastomer product in the embodiment of Fig. 3a.

Fig. 5a is a vertical sectional view showing a sixth embodiment of the present invention.

Fig. 5b is a vertical sectional view showing another gas blowing section of the embodiment of Fig. 5a.

Fig. 5c is a plan view of the gas blowing section of Fig. 5a and 5b.

Fig. 5d is a partial vertical sectional view showing still another gas blowing section

Fig 6a is a vertical sectional view showing a seventh embodiment of the present invention

Fig. 6b is a side view of a steam blowing section of the embodiment of Fig.6a.

Fig. 6c is a side view of gas blowing section of the embodiment of Fig. 6a.

Fig. 7a is a vertical sectional view showing an eighth embodiment of the present invention,

Fig. 7b is a plan view of gas blowing section of the embodiment of Fig. 7a.

Fig. 8a is a vertical sectional view showing a ninth embodiment of the present invention

Fig. 8b is a plan view of gas blowing section of the embodiment of Fig. 8a and

Fig. 9 is a vertical sectional view of a conventional apparatus.

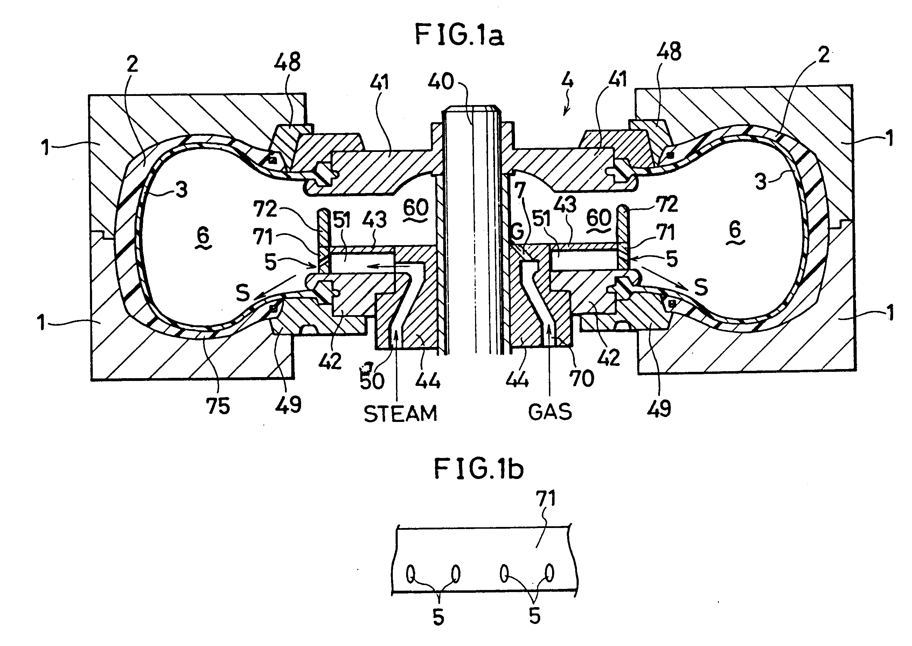

Referring to Figs 1a and 1b a mould 1 and a central unit 4 of a vulcanising machine are almost the same as the conventional apparatus of Fig.9. However, the means in the central unit for blowing steam and gas are different. A centre post 40 and an upper clamp member 41 are provided constructed in the same manner as in the conventional apparatus. However, a first blow means comprising a steam supply passage 50 is formed in a piston gland 44 mounted concentrically on the post 40. Also, an annular supply junction chamber 51 is formed around the centre post 40 and formed in a ring-like upper plate 43 mounted on the upper portion of the piston gland 44. A circumferential weir wall member 71 is mounted on the peripheral end portion of the top surface of a lower clamp member 42.

The supply junction chamber 51 is connected to the steam supply passage 50. The circumferential weir wall member 71 of the supply junction chamber 51 has a plurality of steam nozzles 5 spaced at predetermined intervals around the periphery of the circumferential weir wall member 71. Each nozzle 5 is shaped to direct in a downward direction and each nozzle faces the lower portion of the inner space of a tyre 2 being cured. More specifically, each nozzle 5 faces the lower side wall 75 of the tyre 2.

In the drawing, numeral 49 denotes a lower bead ring and numeral 48 an upper bead ring of a tyre.

A second blow means is also provided which is constructed as follows. A gas supply passage 70 is formed in the piston gland 44. The gas supply passage 70 also serves as a steam condensate discharging passage. Two nozzles 7 are formed in the upper portion of the piston gland 44, namely at the lower position in the neighbourhood of the central mechanism of the vulcanising machine. Each nozzle 7 is connected to the gas supply passage 70 and is directed in an upward direction so as to face the upper portion of the inner space i.e. into the upper central portion of the vulcanising cavity. A cylindrical partition or enclosing wall 72 is mounted on the circumferential weir wall member 71 of the junction chamber 51 so as to define a space 60 for the gas to enter from the nozzles 7.

The distance between the upper end of the enclosing wall 72 and the bottom surface of the upper clamp member 41 is arranged to be within 10% to 30% of the distance between the bottom surface of the upper clamp member 41 and the top surface of the lower clamp member 42 when the mould is closed. in the case of the distance being more then 30% the gas enclosing effect is reduced. In the case of the distance being less than 10% the effect of draining steam condensate is decreased.

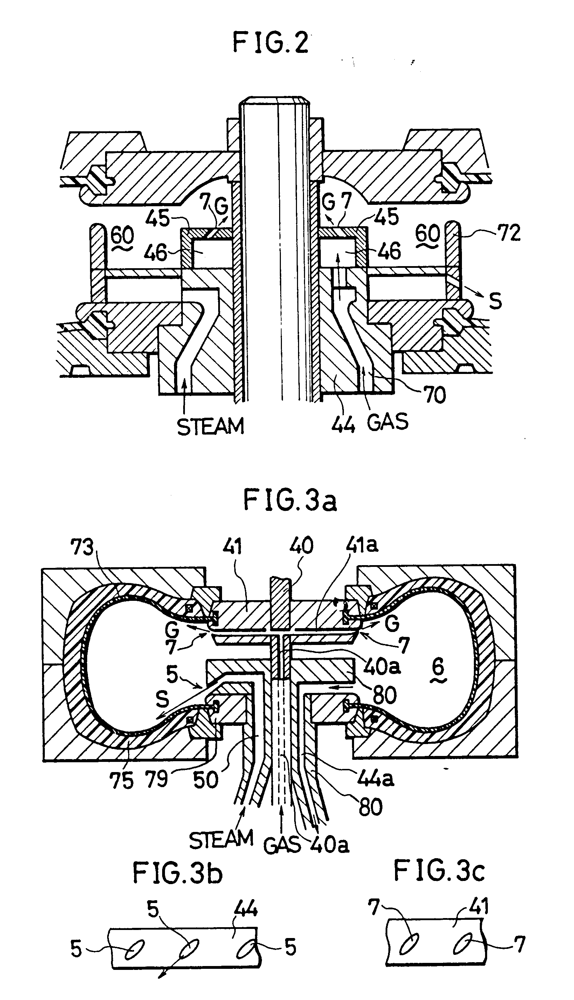

Fig. 2 shows a second embodiment of the present invention which is basically the same as the embodiment of Fig.1a with the following exceptions. An annular gas supply junction chamber 46 is provided over the top surface of a piston gland 44 and around a centre post 40. The gas supply chamber 46 is formed by a casing 45. The gas supply junction chamber 46 is connected to the supply passage 70. The casing 45 has a plurality of gas nozzles 7 in a peripheral direction in the top wall thereof. Each nozzle 7 is directed so as to face the upper central portion of the vulcanising chamber. It should be noted that in this embodiment, a partition or enclosing wall 72 is not provided.

Figs. 3a, 3b and 3c illustrate a third embodiment of the present invention suitable for a Bag-O-Matic type vulcanising machine. The second blow means is constructed as follows. A gas supply passage 40a is formed in the centre post 40 and connects to a plurality of blow passages 41a which are formed radially in the upper clamp member 41. Nozzles 7 are formed at the outlet end of each of the blow passages 41a so as to face the upper portion of the inner space 6 and face the upper side wall 73 of a tyre being cured. Furthermore each nozzle 7 is directed in an upward peripheral direction so that upwardly blown gas can circulate in a peripheral direction in the inner space 6 of the tyre.

Furthermore, a first blow means is formed as follows. A steam supply passage 50 is provide in the lower clamp ring hub 79 and connects to a plurality of nozzles 5 which face the lower portion of the space 6 and thus face the lower side wall 75 of the tyre. It may be appropriate for each nozzle 5 to be directed in a downward peripheral direction so that downwardly blown steam can circulate in a peripheral direction in the inner space 6.

The lower clamp ring hub 79 has a passage 44a for discharging steam and gas. An upper portion of the passage 44a extends in a radial direction to communicate with the inner space 6. It should be noted that it is sufficient to provide one opening to communicate the passage 44a with the inner space 6.

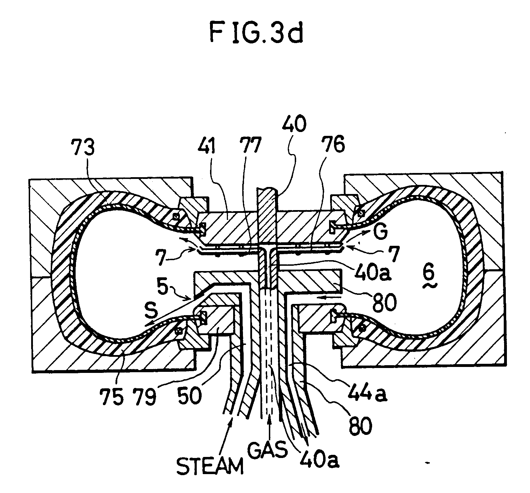

Fig. 3d shows a fourth embodiment in which a plurality of tubular supply members 76 are radially fixed to the underside of an upper clamp member 41 by retainers 77. One end of each supply member 76 is communicated to a supply passage 40a formed in the centre post the other end is in communication with the upper portion of the inner space 6, thus forming the second blow means.

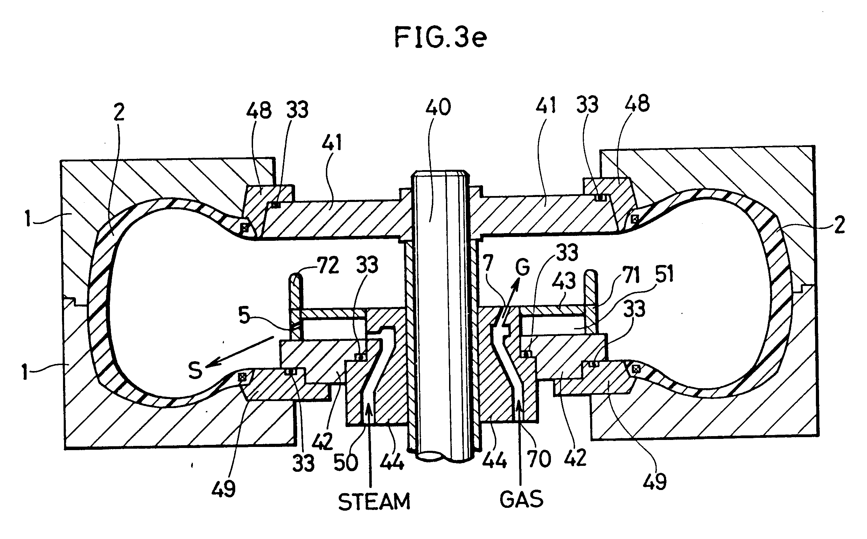

Fig. 3e shows a fifth embodiment in which a bladder is not used to contact the inside of the tyre. Thus it should be noted that the present invention can also be applied for bladderless vulcanising machines as shown in Fig. 3e.

In such a bladderless vulcanising machine as shown in Fig. 3e, sealing rings 33 are provided in appropriate positions, specifically, the interface between the upper bead ring 48 and the upper clamp member 41, the interface between the lower bead ring 49 and the lower clamp member 42, and the interface between the piston gland 44 and the lower clamp member 42 to assure sealing of these interfaces. The piston gland 44, which is provided in the centre lower portion of the vulcanising machine, is formed with a gas supply passage 70. A nozzle 7 is formed in an upper portion of the piston gland 44 and directed in an upward direction. Also, the piston gland 44 is formed with a steam supply passage 50. The steam supply passage 50 is connected to an annular supply junction chamber 51 which is formed around a centre post 40 and defined by a ring-like upper plate 43 mounted on an upper portion of the piston gland 44 and a circumferential weir wall member 71 mounted on a peripheral end portion of a top surface of the lower clamp member 42. The weir wall member 71 of the supply junction chamber 51 has a plurality of steam nozzles 5 at predetermined intervals in the peripheral direction of the weir wall member 71. Each nozzle 5 is directed in a downward direction so as to face the lower portion of the inner space of a tyre 2, more specifically, to face the lower side wall 75 of the tyre 2.

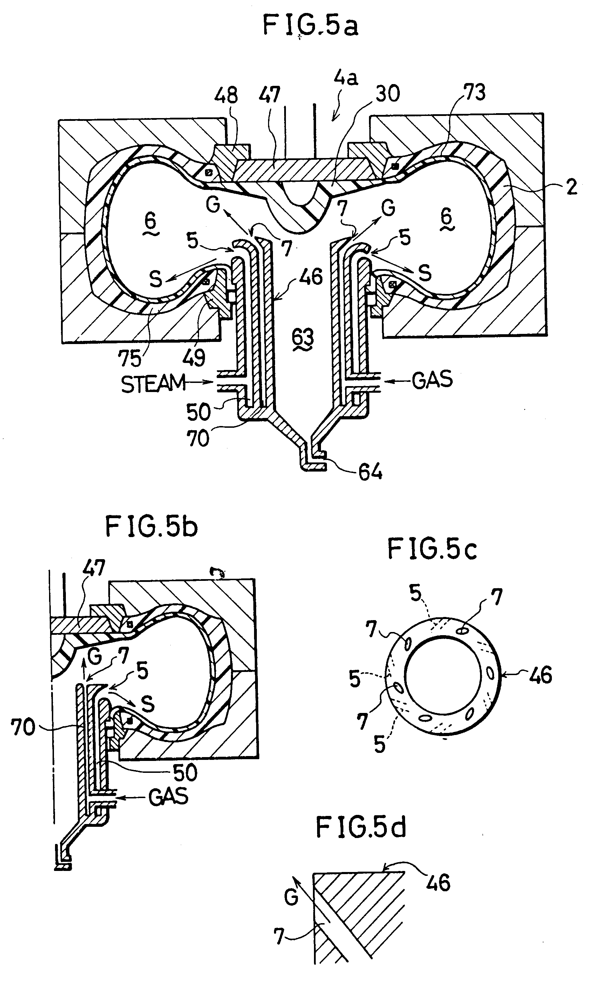

Figs. 5a, 5b and 5c illustrate a sixth embodiment in which the present invention is applied to an Auto-form type vulcanising machine. as shown in Fig. 5a, a central mechanism 4a comprises a chuck assembly 47, a bead ring 48 mounted around the assembly 47, a bag well 46, and a bead ring 49 mounted around the bag well 46. A bladder 30 extends across the upper centre portion where it is received by the chuck assembly 47 and the bead ring 48. The inner peripheral end of the bladder 30, which is positioned in the lower portion, is held by the bag well 46 and the bead ring 49.

The bag well 46 has a space 63 in its centre portion and an outlet 64 for discharging steam and gas from the inner space 6 in its lower end. the bag well 46 is also provided with a steam supply passage 50 and a gas supply passage 70. The steam supply passage 50 is connected to a plurality of steam nozzles 5 which are circumferentially arranged at predetermined intervals in an upper portion of the steam supply passage 50 and are formed so as to face the lower portion of the inner space 6, for example, to face the lower side wall 75 of a tyre 2, thus providing a first blow means. The gas supply passage 70 is connected to a plurality of gas nozzles 7 which are circumferentially arranged at predetermined intervals in the upper portion of the gas supply passage 70, namely at a lower position in the neighbourhood of the central mechanism of the vulcanising machine. Each nozzle 7 is formed so as to face the upper portion of the inner space 6, for example, to face the upper side wall 73 of the tyre 2 thus providing the second blow means.

Fig. 5b shows a modification of the fourth embodiment in which the steam nozzles 5 are made to face in the peripheral downward direction while the gas nozzles 7 are made to face the chuck assembly 47.

The nozzles 5 and 7 of Figs.5a and 5b are formed so as to be respectively inclined in the same direction with respect to their radial directions so as to allow the blown steam and gas to circulate in the same peripheral directions in the inner space 6.

Furthermore, a nozzle opening 7 may be formed in the upper side portion of the bag well 46 as shown in Fig. 5d.

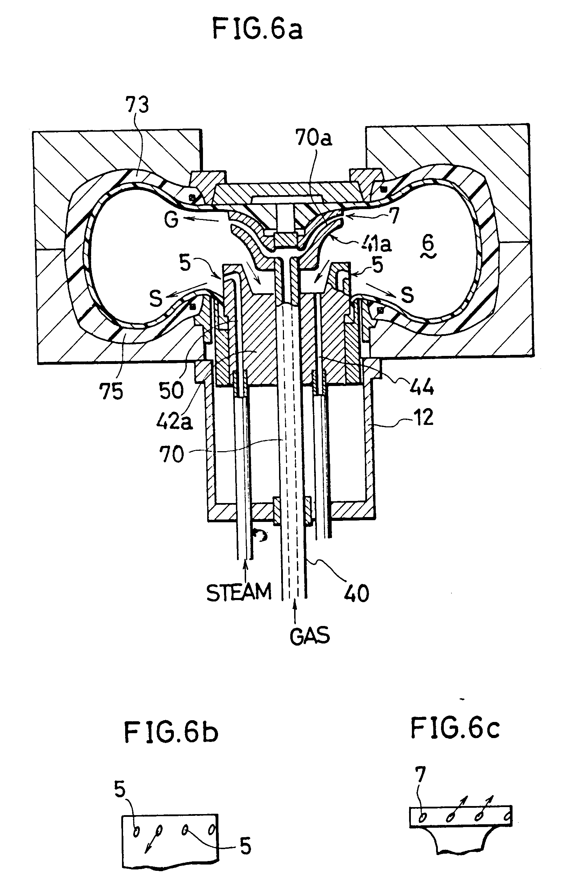

Fig. 6a 6b and 6c illustrate a seventh embodiment in which the present invention is applied to a rolling-in-bladder type vulcanising machine. The second blow means includes a gas supply passage 70 formed in a centre post 40, a plurality of blow passages 70a radially arranged in an upper clamp member 41a, and nozzles 7 provided in the forward end of their respective blow passages 70a, each nozzle 7 facing the upper portion of the inner space 6, for example, the upper side wall 73 of a tyre 2.

The first blow supply means includes a steam supply passage 50 formed in a bag well 42a, and a plurality of nozzles 5 which are circumferentially spaced at predetermined intervals in the upper portion of the bag well 42a. The nozzles 5 connect to the steam supply passage 50 and face the lower portion of the inner space 6, for example, the lower side wall 75 of the tyre 2. The nozzles 5 and 7 are formed so as to be inclined with respect to their respective radial directions as shown in Figs. 6b and 6c so that the blown gas and steam circulate in a peripheral direction in the inner space 6. Indicated at 44 is a drain conduit. Indicated at 12 is a sleeve.

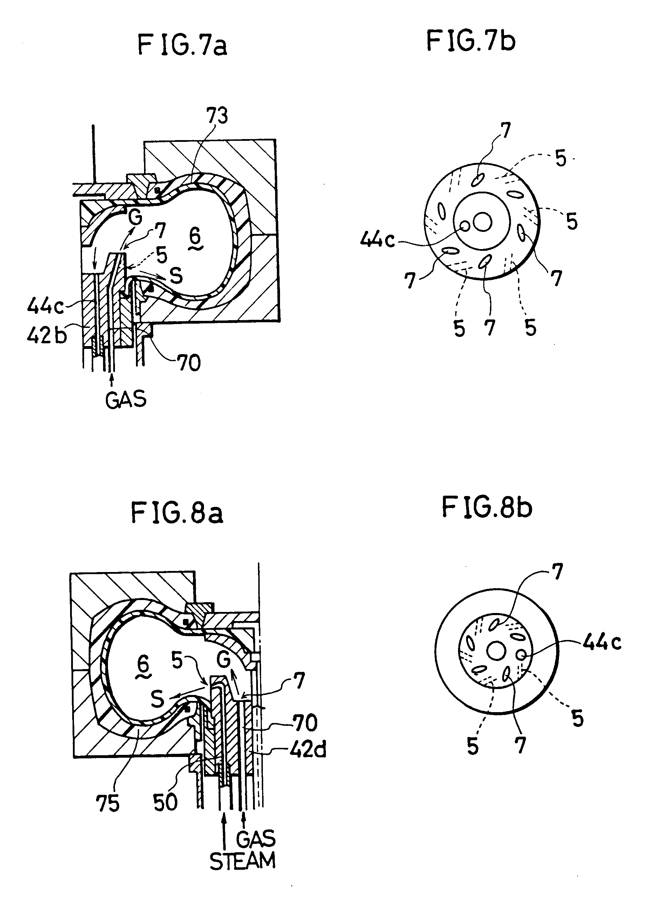

Figs. 7a and 7b illustrate an eigth embodiment of the present invention. A gas supply passage 70 is provided in a bag well 42b and communicated with a plurality of nozzles 7 which are circumferentially arranged at predetermined intervals in the upper portion of the gas suppy passage 70, namely at a lower position in the neighbourhood of the central mechanism of the vulcanising machine. Each nozzle 7 is formed so as to face the upper portion of the inner space 6, for example, the upper side wall 73. Also, a steam supply passage, not shown, is provided in a bag well 42b and connected to a plurality of nozzles 5 which are circumferentially arranged at the forward portion of the steam supply passage (not shown) and formed so as to face the lower portion of the inner space 6, for example, the lower side wall 75. The nozzles 5 and 7 are formed so as to be inclined with respect to their respective radial directions as shown in Fig. 7b so that the blown gas and steam circulate in the peripheral direction in the inner space 6. Furthermore, a passage 44c for discharging gas and steam is provided near the centre of the bag well 42b.

Figs. 8a and 8b illustrate a ninth embodiment of the present invention. A gas supply passage 70 is formed in a well portion of a bag well 42d and connected to a plurality of nozzles 7 which are circumferentially arranged at the upper portion of the gas supply passage 70, namely at a lower position in the neighbourhood of the central mechanism of the vulcanising machine. Each nozzle 7 is formed so as to face the upper portion of the inner space 6. Also, a steam supply passage 50 is formed in the outer portion of the gas supply passage 70 and connects to a plurality of nozzles 5 which are circumferentially arranged at the upper portion of the steam supply passage 50 and formed so as to face the lower portion of the inner space 6. The nozzles 5 and 7 are also inclined with respect to their radial directions as shown in Fig. 8b so that the blown gas and steam circulate in the peripheral direction in the inner space 6. Indicated at 44c is a drain conduit.

A method for vulcanising an elastomer product in the form of a tyre in the apparatus of the present invention is as follows. As in the conventional method, firstly, a tyre 2 is placed in the mould 1, a bladder 3 is placed inside the tyre 2 and pressurised by supplying initial shaping medium through a conduit not shown in the drawing. The mould 1 is then closed so that the tyre 2 is made to come into contact with the inner surface of the mould.

Steam is then supplied from the steam supply passage 50 through the nozzles 5 into the inner space 6 of the tyre 2 at an appropriate pressure, e.g., 15kg square cm for an appropriate period of time, e.g., 5 minutes. The steam is blown in a downward direction from the nozzles 5 against the lower side wall 75 to produce jet streams. The jet streams heat the tyre 2 to an appropriate temperature, e.g., 180 degrees Celsius, at which the progress of the vulcanising reaction is assured. Pressurising gas having a temperature as low as room temperature, e.g., 40 degrees Celsius is then supplied in an upward direction from the gas supply passage 70 through the nozzles 7 into the inner space 6 at an appropriate pressure, e.g., 18 kg square cm and for an appropriate period of time, e.g., 5 minutes. The upwardly blown gas cools the upper portion of the inner space 6, then gradually moves down to the lower portion to mix with the steam. Consequently, the upwardly blown gas, which cools the upper portion of the tyre inner space 6 and also mixes with the steam, prevents a great temperature difference from occurring between the upper and lower portions of the inner space 6.

In the embodiments of Figs. 1a and 2, the blown gas temporarily stays within the space 60 defined by the enclosing wall 72 and then it flows over the enclosing wall 72 into the inner space 6 to gradually mix with the steam. Accordingly, it avoids the conventional occurrence of the steam being adiabatically compressed in the upper portion of the inner space 6, which results in an unfavourable increase in the temperature of the upper potion and a cooling down of the lower bead portion. Consequently, there is no great temperature difference between the upper and lower portions of the inner space 6 as in conventional methods.

For example, in the embodiment of fig. 1a the temperature of point A of the upper bead portion rises along the broken line 18 of Fig. 4a after the supply of gas. The temperature of point B of the lower bead portion rises along the broken line 17 of Fig. 4a. The temperature difference between points A and B comes to be about 5 degrees Celsius which considerably smaller in comparison with the difference of 13 degrees Celsius of the conventional method.

As shown in Fig. 4b, the temperature of point C of the upper side wall of a tyre 2 rises along the broken line 18a after the supply of gas whereas the temperature of point D of the lower side wall rises along the broken line 17A. The temperature difference between points C and D thus comes to be about 4 degrees Celsius which is considerably smaller in comparison with the difference of 12 degrees Celsius of the conventional method.

After completion of the vulcanising operation, the mixture of gas and steam is discharged from the inner space 6 through the discharge line by opening a discharge valve not shown. Thereafter, the valve is closed and another valve for vacuum is opened to separate the bladder 3 from the tyre 2. The vulcanised tyre 2 is finally removed by moving an upper part of the mould 1 to open it. It should be noted that in the case of vulcanising without the use of a bladder, vacuum operation is not required.

In the case of a nylon carcass-ply tyre, cooling water is introduced into the inner space, and after vulcanising, the mixture of gas and water is removed through the discharge line.

As described above, according to the present invention, heating medium, such as high temperature steam, is supplied by blowing in a downward direction into an inner space of an elastomer product placed in a mould and pressurising medium, such as low temperature gas, is supplied by blowing in an upward direction into the inner space. Consequently, the steam and gas are properly mixed with each other to prevent a great temperature difference from occurring within the inner space and this assures uniform vulcanising. Since temperature differences are substantially eliminate, vulcanising can be completed in a shorter time. Thus, it can be established to improve productivity and reduce energy loss.

## Claims

1. A method for vulcanising an elastomer product comprising the steps of heating under pressure an elastomer product (2) placed in a mould (1) by supplying a heating medium such as steam, stopping the supply of the heating medium when the elastomer product (2) rises to a predetermined temperature or when a specified period of time has elapsed, supplying a pressurising medium such as nitrogen gas at a pressure equal to or higher than that of the heating medium until the heating process is completed characterised in that that the heating medium is blown into the lower portion of the vulcanising chamber (6) and the pressurising medium is subsequently blown into the upper portion of the vulcanising chamber.

2. A method according to Claim 1 characterised in that the pressurising medium is blown in the peripheral upward direction and the heating medium is blown in the peripheral downward direction.

3. A method according to Claim 1 or 2 characterised in that the elastomer product is a tyre.

4. A method according to Claim 1, 2, or 3 characterised in that pressurising medium is blown to any position within a zone from an upward centre of the vulcanising chamber to an upper side wall (73) of the elastomer product (2) and the heating medium is blown to a lower side wall (75) of the elastomer product or a portion near the lower side wall (75).

5. An apparatus for vulcanising an elastomer product (2) comprising mould means in which an elastomer is to be placed, a first means (50) for supplying a heating medium such as steam in a vulcanising chamber (6) until the elastomer product (2) rises to a predetermined temperature or until a specified period of time elapses, a second supply means (70) for, after the supply of the heating medium, supplying a pressurizing medium such as nitrogen gas in the vulcanising chamber (6) at a pressure equal to or higher than that of the heating medium so as to complete the heating process, and a discharging means for discharging the vulcanising medium after the heating process is completed, characterised in that, the first supply means (50) blows the heating medium to a lower portion of the vulcanising chamber (6), and the second supply means blows the pressurising medium to an upper portion of the vulcanising chamber (6).

6. An apparatus according to Claim 5 characterised in that mould (1) is a tyre mould.

7. An apparatus according to Claim 5 or 6 characterised in that the pressurising medium is blown to any position within a zone form the upper centre of the vulcanising chamber (6) to an upper side wall (73) of the elastomer product (2) and the heating medium is blown to a lower side wall (71) of the elastomer product or a portion near the lower side wall (75).

8. An apparatus according to in Claim 5, 6, or 7 characterised in that the first supply means comprises a supply passage (50) formed in a lower clamp member (79) of the vulcanising machine and a plurality of nozzles (5) connected to the supply passage (5), an opening of the nozzle (5) being in a side surface of the lower clamp member and facing the lower portion of the vulcanising chamber (6).

9. An apparatus according to Claim 5, 6 7, or 8 characterised in that the second blow supply means comprises a supply passage (70) formed in a centre portion of the vulcanising machine and plurality of nozzles (7) which are radially arranged in an upper clamp ring (41) and connected to the supply passage, (70), the opening of the nozzles (7) facing the upper portion of the vulcanising chamber (6).

10. An apparatus according to Claim 5, 6, 7, or 8 characterised in that the second blow supply means comprises a supply passage (40a) formed in a centre post (40) of the vulcanising chamber and a plurality of nozzles (7) which are radially provided on an underside of an upper clamp member (41) and connected to the supply passage, (40a) the openings of the nozzle (7) facing the upper portion of the vulcanising chamber.

11. An apparatus according to Claim 5, 6, 7, or 8 characterised in that the second blow supply means includes a supply passage (50) formed in a bag well (46) of the vulcanising machine and a plurality of nozzles (5) connected to the supply passage (50) the openings of the nozzles (5)being formed in a top surface or an upper side surface of the bag well (46) and facing the upper portion of the vulcanising chamber.

12. An apparatus according to Claim 5, 6, or 7 characterised in that the first blow supply means includes a supply passage (50) formed in a piston gland (44) of the vulcanising machine, a supply junction chamber (51) defined by a ring-like upper plate (43) mounted on an upper portion of the piston gland (44) and a circumferential weir wall member (71) provided on a radially end portion of a top surface of a lower clamp member (42) and connected to the supply passage (50), a cylindrical partition wall member (72) provided on a radially end portion of a top surface of the supply junction chamber, (51) a plurality of nozzles (5) formed in a lower portion of the weir wall member (71) of the supply junction chamber (51), the opening of each of the nozzles (5) facing the lower portion of the vulcanising chamber (6), the distance between the upper end of the partition wall member (72) and the bottom surface of an upper clamp member (41) being 10 to 30 percent of that between the top surface of the lower clamp member (42) and the bottom surface of the upper clamp member (41) when the mould is entirely closed, and the second blow supply means including a supply passage (70) formed in the piston gland (44) and at least one nozzle (7) connected to the supply passage (70) the opening of the nozzle (7) being formed in the top surface of the piston gland (44) and facing the upper portion of the vulcanising chamber.

13. An apparatus according to Claim 5, 6, or 7 characterised in that the first blown supply means includes a supply passage (50) formed in a piston gland (44) of the vulcanising machine, a supply junction chamber (51) defined by a ring-like upper plate (43) mounted on an upper portion of the piston gland (44) and a circumferential weir wall member (71) provided on a radially end portion of a top surface of a lower clamp member (43) and connected to the supply passage (50), and a plurality of nozzles (5) formed in a lower portion of the weir wall member (71) of the supply junction chamber (51), the openings of the nozzles (5) facing the lower portion of the vulcanising chamber (6), and the second blow supply means includes a supply passage (70) formed in the piston gland, a supply junction chamber (46) provided on the top surface of the piston gland (44) and around a centre post (40) and connected to the supply passage (70), and a plurality of nozzles (7) formed in the top wall of the supply junction chamber (46), the opening of each of the nozzles (7) facing the upper portion of the vulcanising chamber (6).

14. An apparatus according to Claim 12 or 13 characterised in that a circumferential partition wall member (72) is provided on a radially end portion of the top surface of the supply junction chamber (51) of the first blow supply means, the distance between the upper end of the partition wall member (72) and the bottom surface of the upper clamp member (41) being 10 to 30 percent of that between the top surface of the lower clamp member (42) and the bottom surface of the upper clamp member (41) when the mould is entirely closed.

**Revendications**

1. Procédé de vulcanisation d'un produit élastomère, comprenant des étapes de chauffage sous pression d'un produit élastomère (2) placé dans un moule (1) par transmission d'un fluide de chauffage, tel que la vapeur d'eau, d'arrêt de la transmission du fluide de chauffage lorsque le produit élastomère (2) atteint une température prédéterminée ou lorsqu'une période spécifiée s'est écoulée, et de transmission d'un fluide de mise sous pression, tel que de l'azote gazeux, à une pression égale ou supérieure à celle du fluide de chauffage, jusqu'à ce que l'opération de chauffage soit terminée, caractérisé en ce que le fluide de chauffage est soufflé dans la partie inférieure de la chambre de vulcanisation (6), et le fluide de mise sous pression est soufflé ultérieurement dans la partie supérieure de la chambre de vulcanisation.

2. Procédé selon la revendication 1, caractérisé en ce que le fluide de mise sous pression est soufflé en direction périphérique ascendante et le fluide de chauffage est soufflé en direction périphérique descendante.

3. Procédé selon la revendication 1 ou 2, caractérisé en ce que le produit élastomère est un pneumatique.

4. Procédé selon la revendication 1, 2 ou 3, caractérisé en ce que le fluide de mise sous pression est soufflé en position quelconque dans une zone comprise entre le centre supérieur de la chambre de vulcanisation et un flanc supérieur (73) du produit élastomère (2), et le fluide de chauffage est soufflé vers un flanc inférieur (75) du produit élastomère ou une partie proche du flanc inférieur (75).

5. Appareil de vulcanisation d'un produit élastomère (2), comprenant un dispositif de moulage dans lequel un élastomère est destiné à être placé, un premier dispositif (50) destiné à transmettre un fluide de chauffage tel que la vapeur d'eau dans une chambre de vulcanisation (6) jusqu'à ce que le produit élastomère (2) atteigne une température prédéterminée ou jusqu'à ce qu'une période spécifiée se soit écoulée, un second dispositif d'alimentation (70) destiné, après la transmission du fluide de chauffage, à transmettre un fluide de mise sous pression, tel que de l'azote gazeux, dans la chambre de vulcanisation (6), à une pression égale ou supérieure à celle du fluide de chauffage afin que l'opération de chauffage soit terminée, et un dispositif d'évacuation du fluide de vulcanisation après que l'opération de chauffage a été terminée, caractérisé en ce que le premier dispositif d'alimentation (50) souffle le fluide de chauffage vers une partie inférieure de la chambre de vulcanisation (6), et le second dispositif d'alimentation souffle le fluide de mise sous pression vers une partie supérieure de la chambre de vulcanisation (6).

6. Appareil selon la revendication 5, caractérisé en ce que le moule (1) est un moule de pneumatique.

7. Appareil selon la revendication 5 ou 6, caractérisé en ce que le fluide de mise sous pression est soufflé vers une position quelconque dans une zone allant du centre supérieur de la chambre de vulcanisation (6) à un flanc supérieur (73) du produit élastomère (2), et le fluide de chauffage est soufflé vers un flanc inférieur (71) du produit élastomère ou une partie proche du flanc inférieur (75).

8. Appareil selon la revendication 5, 6 ou 7, caractérisé en ce que le premier dispositif d'alimentation comporte un passage d'alimentation (50) formé dans un organe inférieur (79) de serrage de la machine de vulcanisation et plusieurs buses (5) raccordées au passage d'alimentation (5), une ouverture de buse (5) étant formée dans une surface latérale de l'organe inférieur de serrage et étant tournée vers la partie inférieure de la chambre de vulcanisation (6).

9. Appareil selon la revendication 5, 6, 7 ou 8, caractérisé en ce que le second dispositif d'alimentation par soufflage comprend un passage (70) d'alimentation formé dans une partie centrale de la machine de vulcanisation, et plusieurs buses (7) qui sont disposées radialement dans un anneau supérieur (41) de serrage et qui sont raccordées au passage d'alimentation (70), l'ouverture des buses (7) étant tournée vers la partie supérieure de la chambre de vulcanisation (6).

10. Appareil selon la revendication 5, 6, 7 ou 8, caractérisé en ce que le second dispositif d'alimentation par soufflage comprend un passage d'alimentation (40a) formé dans un montant central (40) de la chambre de vulcanisation, et plusieurs buses (7) qui sont disposées radialement à la face inférieure d'un organe supérieur (41) de serrage et qui sont connectées au passage d'alimentation (40a), l'ouverture des buses (7) étant tournée vers la partie supérieure de la chambre de vulcanisation.

11. Appareil selon la revendication 5, 6, 7 ou 8, caractérisé en ce que le second dispositif de soufflage comporte un passage d'alimentation (50) formé dans une colonne (46) de la machine de vulcanisation et plusieurs buses (5) raccordées au passage d'alimentation (50), les ouvertures des buses (5) étant formées dans une face supérieure ou une face latérale supérieure de la colonne (46) et étant tournées vers la partie supérieure de la chambre de vulcanisation.

12. Appareil selon la revendication 5, 6 ou 7, caractérisé en ce que le premier dispositif d'alimentation par soufflage comprend un passage d'alimentation (50) formé dans une garniture (44) de piston de la machine de vulcanisation, une chambre (51) de raccordement d'alimentation délimitée par une plaque supérieure (43) de forme annulaire montée sur une partie supérieure de la garniture (44) du piston, et un organe circonférentiel (71) formant une paroi de déversoir disposé sur une partie d'extrémité radiale d'une surface supérieure d'un organe inférieur (42) de serrage et raccordé au passage (50) d'alimentation, un organe cylindrique (72) formant une cloison, disposé sur une partie d'extrémité radiale d'une surface supérieure de la chambre (51) de raccordement d'alimentation, plusieurs buses (5) formées dans une partie inférieure de l'organe de paroi (71) formant réservoir de la chambre (51), l'ouverture de chacune des buses (5) étant tournée vers la partie inférieure de la chambre de vulcanisation (6), la distance comprise entre l'extrémité supérieure de l'organe (72) formant la cloison et la surface inférieure de l'organe supérieur (41) de serrage étant comprise entre 10 et 30 % de la distance comprise entre la face supérieure de l'organe inférieur (42) de serrage et la face inférieure de l'organe supérieur (41) de serrage lorsque le moule est entièrement fermé, et le second dispositif d'alimentation par soufflage comporte un passage d'alimentation (70) formé dans la garniture (44) du piston et au moins une buse (7) raccordée au passage d'alimentation (70), l'ouverture de la buse (7) étant formée à la face supérieure de la garniture (44) de piston et étant tournée vers la partie supérieure de la chambre de vulcanisation.

**13.** Appareil selon la revendication 5, 6 ou 7, caractérisé en ce que le premier dispositif d'alimentation par soufflage comporte un passage d'alimentation (50) formé dans une garniture (44) de piston de la machine de vulcanisation, une chambre (51) de raccordement d'alimentation délimitée par une plaque supérieure (43) de forme annulaire montée sur une partie supérieure de la garniture (44) de piston et un organe circonférentiel (71) formant une paroi de déversoir, disposé sur une partie d'extrémité radiale d'une surface supérieure d'un organe inférieur (43) de serrage et raccordé au passage d'alimentation (50), et plusieurs buses (5) formées à la partie inférieure de l'organe (71) de paroi de déversoir de la chambre (51) de raccordement d'alimentation, les ouvertures des buses (5) étant tournées vers la partie inférieure de la chambre de vulcanisation (6), et le second dispositif d'alimentation par soufflage comporte un passage d'alimentation (70) formé dans la garniture du piston, une chambre (46) de raccordement d'alimentation disposée à la surface supérieure de la garniture (44) du piston et autour du montant central (40) et raccordée au passage d'alimentation (70), et plusieurs buses (7) formées à la paroi supérieure de la chambre (46) de raccordement d'alimentation, l'ouverture de chaque buse (7) étant tournée vers la partie supérieure de la chambre de vulcanisation (6).

**14.** Appareil selon la revendication 12 ou 13, caractérisé en ce qu'un organe circonférentiel (72) formant une cloison est placé sur une partie d'extrémité radiale de la surface supérieure de la chambre (51) de raccordement d'alimentation du premier dispositif d'alimentation par soufflage, la distance comprise entre l'extrémité supérieure de l'organe (72) formant cloison et la surface inférieure de l'organe supérieur (41) de serrage étant comprise entre 10 et 30 % de la distance comprise entre la surface supérieure de l'organe inférieur (42) de serrage et la surface inférieure de l'organe supérieur (41) de serrage lorsque le moule est totalement fermé.

**Patentansprüche**

**1.** Verfahren zum Vulkanisieren eines elastomeren Produkts mit den Schritten, daß ein in eine Form (1) eingesetztes elastomeres Produkt (2) unter Druck erwärmt wird durch Zuführen eines Heizmediums wie Dampf, daß die Zufuhr des Heizmediums angehalten wird, wenn das elastomere Produkt (2) eine vorbestimmte Temperatur erreicht oder wenn ein festgelegter Zeitraum verstrichen ist, daß ein Druckmedium wie Stickstoffgas mit einem Druckwert gleich oder höher als dem des Heizmediums zugeführt wird, bis der Erwärmungsprozeß vollständig abgelaufen ist, dadurch gekennzeichnet, daß das Heizmedium in den unteren Abschnitt der Vulkanisierkammer (6) eingeblasen und das Druckmedium darnach in den oberen Abschnitt der Vulkanisierkammer eingeblasen wird.

**2.** Verfahren nach Anspruch 1, dadurch gekennzeichnet, daß das Druckmedium in Umfangsrichtung nach oben geblasen wird und das Heizmedium in Umfangsrichtung nach unten geblasen wird.

**3.** Verfahren nach Anspruch 1 oder 2, dadurch gekennzeichnet, daß das elastomere Produkt ein Reifen ist.

**4.** Verfahren nach einem der Ansprüche 1, 2 oder 3, dadurch gekennzeichnet, daß das Druckmedium an irgendeine Stelle innerhalb einer Zone von einem oberen Zentrum der Vulkanisierkammer bis zu einer oberen Seitenwand (73) des elastomeren Produkts (2) geblasen wird und daß das Heizmedium an eine untere Seitenwand (75) des elastomeren Produkts oder einen Abschnitt in der Nähe der unteren Seitenwand (75) geblasen wird.

5. Vorrichtung zum Vulkanisieren eines elastomeren Produkts (2) mit Formmittel, in das ein Elastomer einzusetzen ist, einem ersten Mittel (50) zum Zuführen eines Heizmediums wie Dampf in eine Vulkanisierkammer (6), bis das elastomere Produkt (2) zu einer vorbestimmten Temperatur ansteigt oder bis eine festgelegte Zeitlänge verstreicht, einem zweiten Zuführmittel (70), um nach dem Zuführen des Heizmediums ein Druckmedium wie Stickstoffgas in die Vulkanisierkammer (6) zuzuführen mit einem Druck gleich dem oder höher als dem des Heizmediums, um so den Erwärmungsprozeß zu vervollständigen, und ein Auslaßmittel zum Auslassen des Vulkanisiermediums nachdem der Erwärmungsvorgang vervollständigt ist, dadurch gekennzeichnet, daß das erste Zuführmittel (50) das Heizmedium an einen unteren Abschnitt der Vulkanisierkammer (6) bläst und das zweite Zuführmittel das Druckmedium an einen oberen Abschnitt der Vulkanisierkammer (6) bläst.

6. Vorrichtung nach Anspruch 5, dadurch gekennzeichnet, daß die Form (1) eine Reifenform ist.

7. Vorrichtung nach Anspruch 5 oder 6, dadurch gekennzeichnet, daß das Druckmedium zu einer Stelle innerhalb einer Zone von dem oberen Zentrum der Vulkanisierkammer (6) zu einer oberen Seitenwand (73) des elastomeren Produkts geblasen wird und das Heizmedium zu einer unteren Seitenand (71) des elastomeren Produkts oder zu einem Abschnitt in der Nähe der unteren Seitenwand (75) geblasen wird.

8. Vorrichtung nach einem der Ansprüche 5, 6 oder 7, dadurch gekennzeichnet, daß das erste Zuführmittel einen in einem unteren Klemmglied (79) der Vulkanisiermaschine ausgebildeten Zuführdurchlaß (50) umfaßt, und eine Vielzahl von an dem Zuführdurchlaß (50) angeschlossenen Düsen (5), wobei eine Öffnung der Düse (5) in einer Seitenfläche des unteren Klemmgliedes ist und dem unteren Abschnitt der Vulkanisierkammer (6) zugewendet ist.

9. Vorrichtung nach Anspruch 5, 6, 7 oder 8, dadurch gekennzeichnet, daß das zweite Blaszuführmittel einen in einem Zentralabschnitt der Vulkanisiermaschine ausgebildeten Zuführdurchlaß (70) und eine Vielzahl von Düsen (7) umfaßt, die in einem oberen Klemmring (41) radial angeordnet und mit dem Zuführdurchlaß (70) verbunden sind, wobei die Öffnung der Düsen (7) dem oberen Abschnitt der Vulkanisierkammer (6) zugewendet ist.

10. Vorrichtung nach Anspruch 5, 6, 7 oder 8, dadurch gekennzeichnet, daß das zweite Blaszuführmittel einen in einer Zentralstütze (40) der Vulkanisierkammer ausgebildeten Zuführdurchlaß (40a) umfaßt und eine Vielzahl von Düsen (7), die radial an einer Unterseite eines oberen Klemmgliedes (41) vorgesehen und an dem Zuführdurchlaß (40a) angeschlossen sind, wobei die Öffnungen der Düse (7) dem oberen Abschnitt der Vulkanisierkammer zugewendet sind.

11. Vorrichtung nach Anspruch 5, 6, 7 oder 8, dadurch gekennzeichnet, daß das zweite Blaszuführmittel einen in einen Balgschacht (46) der Vulkanisiermaschine ausgebildeten Versorgungsdurchlaß (50) enthält und eine Vielzahl von an dem Versorgungsdurchlaß (50) angeschlossene Düsen (5), wobei die Öffnungen der Düsen (5) in einer oberen Fläche oder einer oberen Seitenfläche des Balgschachtes (46) ausgebildet und dem oberen Abschnitt der Vulkanisierkammer zugewendet sind.

12. Vorrichtung nach einem der Ansprüche 5, 6 oder 7, dadurch gekennzeichnet, daß das erste Blaszuführmittel enthält einen in einer Kolben-Stopfbüchse (44) der Vulkanisiermaschine ausgebildeten Zuführdurchlaß (50), eine durch eine an einem oberen Abschnitt der Kolbenstopfbüchse (44) angebrachte ringartige obere Platte (43) und ein an einem radialen Endabschnitt einer oberen Fläche eines unteren Klemmgliedes (42) vorgesehenes Umfangswehrwandteil (71) bestimmte und an dem Zuführdurchlaß (50) angeschlossene Zuführ-Verbindungskammer (51), wobei ein zylindrisches Teilungswandteil (72) an einem radialen Endabschnitt einer oberen Fläche der Zuführ-Verbindungskammer (51) vorgesehen ist, eine Vielzahl von Düsen (5) in einem unteren Abschnitt des Wehrwandteils (71) der Zuführ-Verbindungskammer (51) ausgebildet ist, die Öffnung jeder Düse (5) dem unteren Abschnitt der Vulkanisierkammer (6) zugewendet ist, der Abstand zwischen dem oberen Ende des Teilungswandteils (72) und der Bodenfläche eines oberen Klemmgliedes (41) 10 bis 30% des Abstands zwischen der oberen Fläche des unteren Klemmteils (42) und der Bodenfläche des oberen Klemmgliedes (41) bei vollständig geschlossener Form beträgt und das zweite Blaszuführmittel enthält einen in der Kolbenstopfbüchse (44) ausgebildeten Zuführdurchlaß (70) und mindestens eine an dem Zuführdurchlaß (70) angeschlossene Düse (7), wobei die Öffnung der Düse (7) in der oberen Fläche der Kolbenstopfbüchse (44) ausgebildet und dem oberen Abschnitt der Vulkanisierkammer zugewendet ist.

13. Vorrichtung nach Anspruch 5, 6 oder 7, dadurch gekennzeichnet, daß das erste Blaszuführmittel enthält einen in einer Kolbenstopfbüchse (44) der Vulkanisiermaschine ausgebildeten Zuführdurchlaß (50), eine durch eine an einem oberen Abschnitt der Kolbenstopfbüchse (4) befestigte ringartige obere Platte (43) und eine an einem radialen Endabschnitt einer oberen Fläche eines unteren Klemmgliedes (43) vorgesehene Umfangswehrwandteil (71) bestimmte Zuführverbindungskammer (51), die an dem Zuführdurchlaß (50) angeschlossen ist und eine Vielzahl von in einem unteren Abschnitt des Wehrwandteils (71) der Zuführverbindungskammer (51) ausgebildeten Düsen (5), wobei die Öffnungen der Düsen (5) dem unteren Abschnitt der Vulkanisierkammer (6) zugewendet sind, und das zweite Blaszuführmittel enthält einen in der Kolbenstopfbüchse ausgebildeten Zuführdurchlaß (70), eine an der oberen Fläche der Kolbenstopfbüchse (44) und um einen Zentralträger (40) vorgesehene Zuführverbindungskamer (46), die an dem Zuführdurchlaß (70) angeschlossen ist und eine Vielzahl von in der oberen Wand der Zuführverbindungskammer (46) ausgebildeten Düsen (7), wobei die Öffnung jeder Düse (7) dem oberen Abschnitt der Vulkanisierkammer (6) zugewendet ist.

14. Vorrichtung nach Anspruch 12 oder 13, dadurch gekennzeichnet, daß ein Umfangsteilungswandteil (72) an einem radialen Endabschnitt der oberen Fläche der Zuführverbindungskammer (51) des ersten Blaszuführmittels vorgesehen ist, wobei der Abstand zwischen dem oberen Ende des Teilungswandteils (72) und der Bodenfläche des oberen Klemmgliedes (41) 10 bis 30% des Abstandes zwischen der oberen Fläche des unteren Klemmgliedes (42) und der Bodenfläche des oberen Klemmgliedes (41) bei vollständig geschlossener Form beträgt.

EP 0 323 164 B1

FIG.1a

FIG.1b

13

EP 0 323 164 B1

## FIG.2

STEAM    44 GAS

## FIG.3a

STEAM   GAS  40a

## FIG.3b

## FIG.3c

# FIG.3d

# FIG.3e

# FIG.4a

EP 0 323 164 B1

# FIG.4b

## FIG.5a

## FIG.5b

## FIG.5c

## FIG.5d

# FIG.6a

# FIG.6b

# FIG.6c

FIG.7a

FIG.7b

FIG.8a

FIG.8b

# FIG.9